# EUROPEAN PATENT APPLICATION

(11) **EP 4 675 136 A1**
(43) Date of publication of application: **07.01.2026**
(21) Application number: 25186797.4
(22) Date of filing: 01.07.2025
(51) Int. Cl.: F16K 11/07, F16K 11/22, F16K 27/00, F16K 3/314

(54) **SWITCHING DEVICE**

(30) Priority: 03.07.2024 JP 2024107272
(71) Applicant: TOYOTA JIDOSHA KABUSHIKI KAISHA, Toyota-shi, Aichi-ken 471-8571 (JP)
(72) Inventor: MORIYAMA, Shuji, TOYOTA-SHI, AICHI-KEN, 471-8571 (JP); OGATA, Yusuke, TOYOTA-SHI, AICHI-KEN, 471-8571 (JP)
(74) Representative: Cabinet Beau de Loménie

(57) **Abstract**

A switching device (5) is a switching device that can be provided in a thermal management circuit and that can switch a flow path of a medium flowing through the thermal management circuit. The switching device (5) includes at least one spool (101 to 103), a case (20), and a seal material (500). A part of the flow path is formed in the case (20). The at least one spool includes a hollow spool (101) made of a synthetic resin and formed in a hollow shape. The hollow spool (101) has at least one opening (h10, h20). The seal material (500) is provided between an outer circumferential surface of the hollow spool (101) and the case (20).

## Description

### CROSS REFERENCE TO RELATED APPLICATIONS

This nonprovisional application is based on Japanese Patent Application No. 2024-107272 filed on July 3, 2024 with the Japan Patent Office, the entire contents of which are hereby incorporated by reference and to which the person of the art can refer when considering the present disclosure.

### BACKGROUND

### Field

The present disclosure relates to a switching device.

### Description of the Background Art

For example, U.S. Patent Application Publication No. 2022/0314735 discloses an octovalve used for a thermal management circuit of a vehicle. The octovalve has a stem shell having three channels.

On the other hand, Japanese Patent Laying-Open No. 2016-125626 discloses a flow path switching unit having a spool and a sleeve. The spool has a hollow portion forming an internal space.

### SUMMARY

In a thermal management circuit as described in U.S. Patent Application Publication No. 2022/0314735, it is desirable to reduce heat transfer between a medium and a spool, for example, in order to increase the accuracy of managing the temperature of the medium. Accordingly, it is conceivable to form the spool using a synthetic resin, for example.

However, in such a configuration, there is a concern that the medium may leak from a gap formed between the spool and a case due to a tolerance at the time of molding the spool.

An object of the present disclosure is to provide a switching device that can suppress leakage of a medium from between a spool and a case, while ensuring the accuracy of managing the temperature of the medium.

A switching device according to one aspect of the present disclosure is a switching device that can be provided in a thermal management circuit and that can switch a flow path of a medium flowing through the thermal management circuit, the switching device including at least one spool, a case that houses the at least one spool, and a seal material provided between the at least one spool and the case, wherein a part of the flow path is formed in the case, the at least one spool includes a hollow spool made of a synthetic resin and formed in a hollow shape, the hollow spool has at least one opening that causes a space inside the hollow spool to communicate with a space outside the hollow spool, and the seal material is provided between an outer circumferential surface of the hollow spool and the case.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is an exploded perspective view of a switching device according to an embodiment of the present disclosure.
Fig. 2 is an exploded front view of a valve assembly.
Fig. 3 is a perspective view of the valve assembly.
Fig. 4 is a perspective view of a case.
Fig. 5 is a view schematically showing a modification of a rod and a spool.

### DESCRIPTION OF THE PREFERRED EMBODIMENTS

Hereinafter, an embodiment of the present disclosure will be described in detail with reference to the drawings. In the drawings, the same or corresponding parts will be designated by the same reference numerals, and the description thereof will not be repeated.

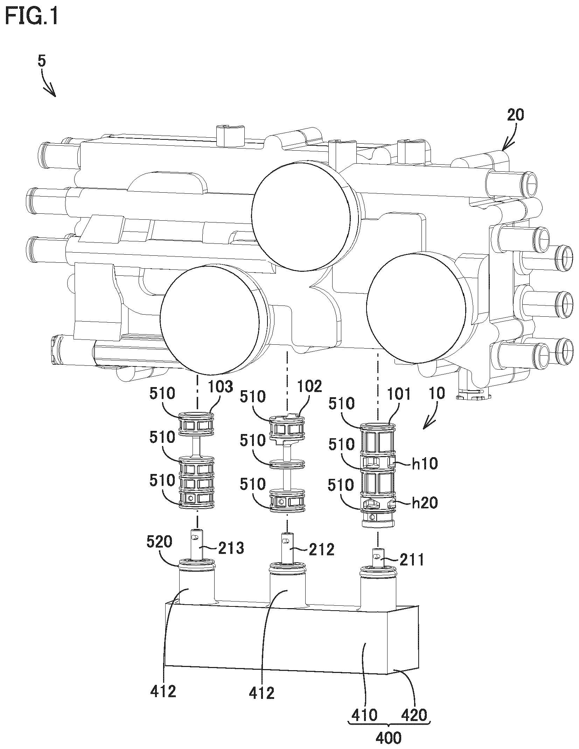

Fig. 1 is an exploded perspective view of a switching device 5 according to an embodiment of the present disclosure. Switching device 5 is preferably applied to a thermal management circuit (not shown). In the thermal management circuit, a medium (such as water) that transfers and receives heat is circulated. The thermal management circuit may be a circuit for controlling the temperature of a vehicle battery, for example.

Switching device 5 can be provided in the thermal management circuit. Switching device 5 can switch a flow path of the medium flowing through the thermal management circuit. As shown in Fig. 1, switching device 5 includes a valve assembly 10 and a case 20.

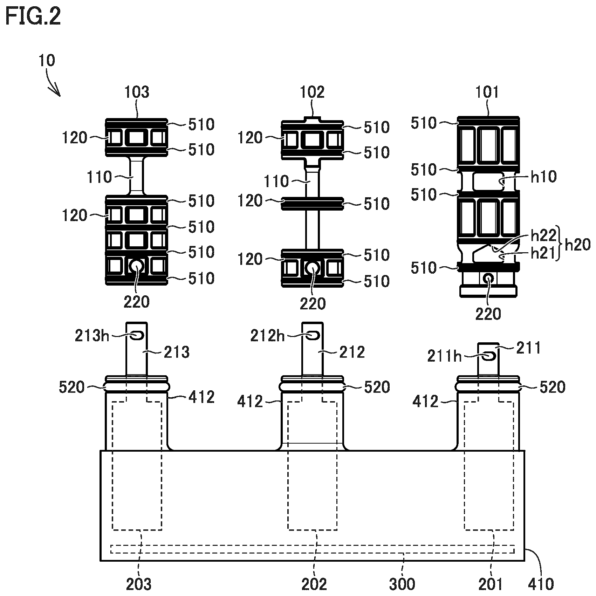

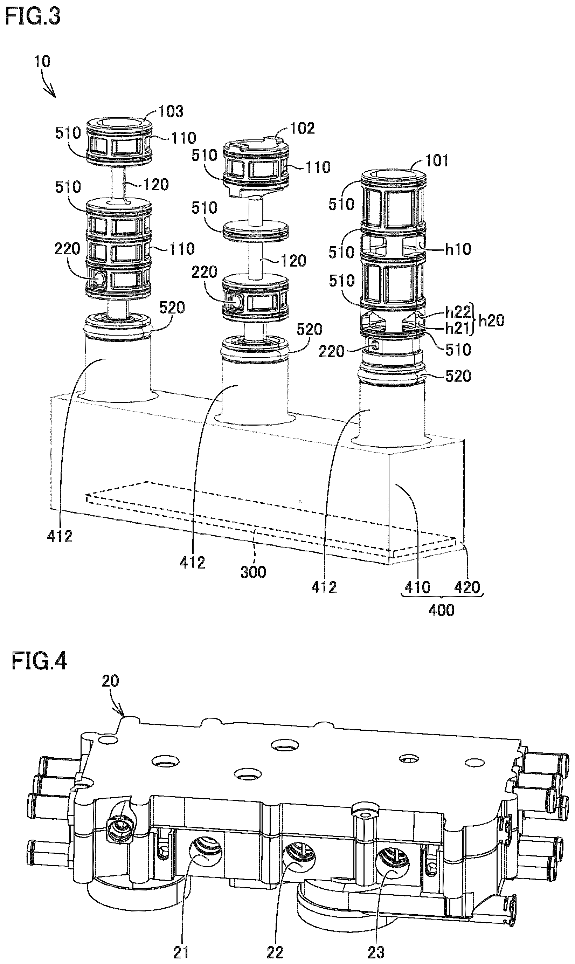

Fig. 2 is an exploded front view of the valve assembly. Fig. 3 is a perspective view of the valve assembly. As shown in Figs. 2 and 3, valve assembly 10 has at least one spool 101 to 103, at least one actuator 201 to 203, a substrate 300, a housing 400, and a seal material 500.

In the present embodiment, the at least one spool includes three spools. Specifically, the at least one spool includes a hollow spool 101, a first valve spool 102, and a second valve spool 103.

Hollow spool 101 is made of a synthetic resin and is formed in a hollow shape. Hollow spool 101 is formed in a substantially cylindrical shape. Hollow spool 101 may be formed by injection molding of a synthetic resin containing glass fibers. In this aspect, the glass fibers are likely to be oriented along an axial direction of hollow spool 101, which suppresses occurrence of uneven strain due to temperature change.

Hollow spool 101 has at least one opening h10, h20. At least one opening h10, h20 causes a space inside hollow spool 101 to communicate with a space outside hollow spool 101. As shown in Figs. 2 and 3, the at least one opening includes a first opening h10 and a second opening h20 formed at positions spaced apart from each other in the axial direction of hollow spool 101 (an up-down direction in Fig. 2). In the present embodiment, hollow spool 101 has a plurality of first openings h10 and a plurality of second openings h20.

The plurality of first openings h10 are arranged with a spacing therebetween in a circumferential direction of hollow spool 101. A dimension of each first opening h10 in the circumferential direction is formed to be substantially constant in the axial direction of hollow spool 101.

The plurality of second openings h20 are arranged with a spacing therebetween in the circumferential direction. The plurality of second openings h20 are provided at positions spaced apart from respective first openings h10 in the axial direction. As shown in Figs. 2 and 3, each second opening h20 has a base portion h21 and an adjustment portion h22.

A dimension of base portion h21 in the circumferential direction is formed to be constant in the axial direction. The dimension of base portion h21 in the circumferential direction may be set to be the same as the dimension of first opening h10 in the circumferential direction.

A dimension of adjustment portion h22 in the circumferential direction gradually decreases with increasing proximity to first opening h10 (with increasing distance from base portion h21).

When switching device 5 including hollow spool 101 is connected to the thermal management circuit, switching device 5 is preferably connected to the thermal management circuit such that switching of the flow path leading to a device in which a relatively small pressure loss occurs is performed by second opening h20 and switching of the flow path leading to a device in which a relatively large pressure loss occurs is performed by first opening h10. Thereby, when compared with a case where first opening h10 and second opening h20 have the same shape, a relatively large amount of the medium is suppressed from flowing into the device in which a relatively small pressure loss occurs.

First valve spool 102 is disposed at a position spaced apart from hollow spool 101. An axial direction of first valve spool 102 is parallel to the axial direction of hollow spool 101. First valve spool 102 is an example of "another valve spool" in the present disclosure.

Second valve spool 103 is disposed at a position spaced apart from both hollow spool 101 and first valve spool 102. An axial direction of second valve spool 103 is parallel to the axial direction of hollow spool 101. Second valve spool 103 is disposed at a position where first valve spool 102 is sandwiched between second valve spool 103 and hollow spool 101 in a facing direction in which hollow spool 101 and first valve spool 102 face each other (a left-right direction in Fig. 2). Second valve spool 103 is an example of "another valve spool" in the present disclosure.

First valve spool 102 and second valve spool 103 each have a shaft portion 110 and partition portions 120.

The at least one actuator includes three actuators. Specifically, the at least one actuator includes a hollow spool actuator 201, a first actuator 202, and a second actuator 203.

Hollow spool actuator 201 can drive hollow spool 101. Hollow spool actuator 201 has a rod 211 connected to hollow spool 101. Rod 211 extends parallel to the axial direction of hollow spool 101.

Hollow spool 101 is connected to rod 211 so as to be movable with respect to rod 211 along the facing direction (the left-right direction in Fig. 2). Specifically, rod 211 is provided with a through hole 211h. A length of through hole 211h in the facing direction is longer than a length of through hole 211h in the axial direction. Hollow spool 101 is connected to rod 211 by a pin 220 inserted into through hole 211h. In the present embodiment, hollow spool 101 is movable with respect to rod 211 along a radial direction of rod 211.

First actuator 202 can drive first valve spool 102. First actuator 202 has a rod 212 connected to first valve spool 102. Rod 212 extends parallel to the axial direction of first valve spool 102. First actuator 202 is an example of "another actuator" in the present disclosure. Rod 212 is an example of "another rod" in the present disclosure.

First valve spool 102 is connected to rod 212 so as to be movable with respect to rod 212 along the facing direction. Specifically, rod 212 is provided with a through hole 212h. A length of through hole 212h in the facing direction is longer than a length of through hole 212h in the axial direction. First valve spool 102 is connected to rod 212 by pin 220 inserted into through hole 212h. In the present embodiment, first valve spool 102 is movable with respect to rod 212 along a radial direction of rod 212.

Second actuator 203 can drive second valve spool 103. Second actuator 203 has a rod 213 connected to second valve spool 103. Rod 213 extends parallel to the axial direction of second valve spool 103. Second actuator 203 is an example of "another actuator" in the present disclosure. Rod 213 is an example of "another rod" in the present disclosure.

Second valve spool 103 is connected to rod 213 so as to be movable with respect to rod 213 along the facing direction. Specifically, rod 213 is provided with a through hole 213h. A length of through hole 213h in the facing direction is longer than a length of through hole 213h in the axial direction. Second valve spool 103 is connected to rod 213 by pin 220 inserted into through hole 213h. In the present embodiment, second valve spool 103 is movable with respect to rod 213 along a radial direction of rod 213.

Actuators 201 to 203 are mounted on substrate 300.

Housing 400 houses the at least one actuator. In the present embodiment, housing 400 houses three actuators 201 to 203 and substrate 300. Housing 400 houses three actuators 201 to 203 such that the axial directions of spools 101 to 103 are parallel to each other.

Housing 400 includes an actuator housing portion 410 and a substrate housing portion 420.

Actuator housing portion 410 houses actuators 201 to 203. Actuator housing portion 410 has holding portions 412 that hold actuators 201 to 203. Each holding portion 412 is formed in a cylindrical shape. Holding portions 412 are arranged with a spacing therebetween in the facing direction.

Substrate housing portion 420 houses substrate 300. Substrate housing portion 420 is adjacent to actuator housing portion 410. Substrate housing portion 420 is adjacent to actuator housing portion 410 on a side opposite to a side on which rods 211 to 213 are located with respect to actuators 201 to 203.

Seal material 500 is provided between at least one spool 101 to 103 and case 20.

As shown in Figs. 1 to 3, seal material 500 has a plurality of spool seals 510 and a plurality of base seals 520.

Spool seals 510 are attached to outer circumferential surfaces of spools 101 to 103. Specifically, the plurality of spool seals 510 are attached to the outer circumferential surface of hollow spool 101 with a spacing therebetween in the axial direction. The plurality of spool seals 510 are attached to outer circumferential surfaces of partition portions 120 of first valve spool 102 with a spacing therebetween in the axial direction. The plurality of spool seals 510 are attached to outer circumferential surfaces of partition portions 120 of second valve spool 103 with a spacing therebetween in the axial direction.

Base seals 520 are attached to outer circumferential surfaces of holding portions 412.

Case 20 houses the at least one spool. In the present embodiment, case 20 houses three spools 101 to 103. A part of the flow path in the thermal management circuit is formed in case 20. Case 20 is made of a synthetic resin, for example.

As shown in Fig. 4, case 20 has three surrounding portions 21 to 23. Surrounding portion 21 surrounding hollow spool 101 allows hollow spool 101 to move along the axial direction with respect to surrounding portion 21. Surrounding portion 22 surrounding first valve spool 102 allows first valve spool 102 to move along the axial direction with respect to surrounding portion 22. Surrounding portion 23 surrounding second valve spool 103 allows second valve spool 103 to move along the axial direction with respect to surrounding portion 23. Surrounding portions 21 to 23 lead to the flow path formed in case 20.

Surrounding portions 21 to 23 are in close contact with seal material 500. In other words, spool seals 510 and base seals 520 are in close contact with inner circumferential surfaces of surrounding portions 21 to 23. Spool seals 510 can slide in the axial direction, together with spools 101 to 103, with respect to the inner circumferential surfaces of surrounding portions 21 to 23, while being in close contact with the inner circumferential surfaces.

As described above, in switching device 5 according to the present embodiment, since spools 101 to 103 are made of a synthetic resin, heat transfer between the medium and spools 101 to 103 is relatively small. Accordingly, the accuracy of managing the temperature of the medium is ensured. Further, since seal material 500 is provided between spools 101 to 103 and surrounding portions 21 to 23, even in a case where a gap is formed between spools 101 to 103 and surrounding portions 21 to 23 due to a tolerance at the time of molding spools 101 to 103, leakage of the medium from the gap is suppressed.

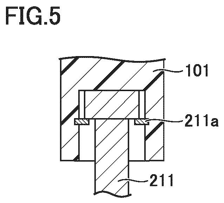

It should be noted that rod 211 may be connected to hollow spool 101 by a retaining member 211a, as shown in Fig. 5. Also in this case, hollow spool 101 is connected to rod 211 so as to be movable with respect to rod 211 along the facing direction (a left-right direction in Fig. 5).

It will be understood by those skilled in the art that the exemplary embodiment described above is a specific example of the following aspects.

### [Aspect 1]

A switching device that can be provided in a thermal management circuit and that can switch a flow path of a medium flowing through the thermal management circuit, the switching device including:
at least one spool;
a case that houses the at least one spool; and
a seal material provided between the at least one spool and the case, wherein a part of the flow path is formed in the case,
the at least one spool includes a hollow spool made of a synthetic resin and formed in a hollow shape,
the hollow spool has at least one opening that causes a space inside the hollow spool to communicate with a space outside the hollow spool, and
the seal material is provided between an outer circumferential surface of the hollow spool and the case.

In this switching device, since the hollow spool is made of a synthetic resin, heat transfer between the medium and the hollow spool is relatively small. Accordingly, the accuracy of managing the temperature of the medium is ensured. Further, since the seal material is provided between the hollow spool and the case, even in a case where a gap is formed between the hollow spool and the case due to a tolerance at the time of molding the hollow spool, leakage of the medium from the gap is suppressed.

### [Aspect 2]

The switching device according to aspect 1, wherein
the at least one opening includes a first opening and a second opening formed at positions spaced apart from each other in an axial direction of the hollow spool,
the second opening includes an adjustment portion, and
a dimension of the adjustment portion in a circumferential direction of the hollow spool gradually decreases with increasing proximity to the first opening in the axial direction.

In this aspect, for example, in a case where the thermal management circuit includes two devices connected in parallel to each other and having different pressure losses caused when the medium passes through the devices, and the switching device is connected to the thermal management circuit, the switching device is connected to the thermal management circuit such that switching of the flow path leading to the device in which a relatively small pressure loss occurs is performed by the second opening. Thereby, when compared with a case where the first opening and the second opening have the same shape, a relatively large amount of the medium is suppressed from flowing into the device in which a relatively small pressure loss occurs.

### [Aspect 3]

The switching device according to aspect 1 or 2, further including:
at least one actuator that drives the at least one spool; and
a housing that houses the at least one actuator, wherein
the at least one spool includes another valve spool different from the hollow spool,
the at least one actuator includes
   a hollow spool actuator that can drive the hollow spool along an axial direction of the hollow spool, and
   another actuator that can drive the other valve spool along an axial direction of the other valve spool, and
the housing houses the hollow spool actuator and the other actuator such that the axial direction of the hollow spool and the axial direction of the other valve spool are parallel to each other.

In this aspect, a plurality of spools are disposed in a relatively space-saving manner.

### [Aspect 4]

The switching device according to aspect 3, further including a substrate on which the hollow spool actuator and the other actuator are mounted, wherein the housing includes
an actuator housing portion that houses the hollow spool actuator and the other actuator, and
a substrate housing portion that is adjacent to the actuator housing portion and that houses the substrate.

In this aspect, since the actuators and the substrate are housed in a single housing, the space for disposing the actuators and the substrate is reduced.

### [Aspect 5]

The switching device according to aspect 3 or 4, wherein
the hollow spool actuator includes a rod that extends in a direction parallel to the axial direction of the hollow spool and that is connected to the hollow spool,
the other actuator includes another rod that extends in a direction parallel to the axial direction of the other valve spool and that is connected to the other valve spool,
the hollow spool is connected to the rod so as to be movable with respect to the rod in a direction orthogonal to an axial direction of the rod, and
the other valve spool is connected to the other rod so as to be movable with respect to the other rod in a direction orthogonal to an axial direction of the other rod.

In this aspect, assembly of the spools to the case is facilitated. Further, the spools are suppressed from sliding strongly with respect to the case.

### [Aspect 6]

The switching device according to any one of aspects 1 to 5, wherein
the case includes a surrounding portion that is in close contact with the seal material and that allows the hollow spool to move along an axial direction of the hollow spool, and
the surrounding portion leads to the flow path.

In this aspect, since the surrounding portion of the case also functions as a sleeve in the valve spool, the number of components is reduced when compared with a case where a dedicated sleeve is provided.

Although the embodiment of the present disclosure has been described, it should be understood that the embodiment disclosed herein is illustrative and non-restrictive in every respect. The scope of the present disclosure is defined by the scope of the claims, and is intended to include any modifications within the scope and meaning equivalent to the scope of the claims.

## Claims

1. A switching device (5) that can be provided in a thermal management circuit and that can switch a flow path of a medium flowing through the thermal management circuit, the switching device comprising:
at least one spool (101 to 103);
a case (20) that houses the at least one spool; and
a seal material (500) provided between the at least one spool and the case (20), wherein
a part of the flow path is formed in the case (20),
the at least one spool includes a hollow spool (101) made of a synthetic resin and formed in a hollow shape,
the hollow spool (101) has at least one opening (h10, h20) that causes a space inside the hollow spool (101) to communicate with a space outside the hollow spool (101), and
the seal material (500) is provided between an outer circumferential surface of the hollow spool (101) and the case (20).

2. The switching device (5) according to claim 1, wherein
the at least one opening includes a first opening (h10) and a second opening (h20) formed at positions spaced apart from each other in an axial direction of the hollow spool (101),
the second opening (h20) includes an adjustment portion (h22), and
a dimension of the adjustment portion in a circumferential direction of the hollow spool (101) gradually decreases with increasing proximity to the first opening (h10) in the axial direction.

3. The switching device (5) according to claim 1 or 2, further comprising:
at least one actuator (201 to 203) configured to drive the at least one spool; and
a housing (400) that houses the at least one actuator, wherein
the at least one spool includes another valve spool (102) different from the hollow spool (101),
the at least one actuator includes
a hollow spool actuator (201) configured to drive the hollow spool (101) along an axial direction of the hollow spool (101), and
another actuator (202) configured to drive the other valve spool along an axial direction of the other valve spool, and
the housing (400) houses the hollow spool actuator (201) and the other actuator (202) such that the axial direction of the hollow spool (101) and the axial direction of the other valve spool (102) are parallel to each other.

4. The switching device (5) according to claim 3, further comprising a substrate (300) on which the hollow spool actuator (201) and the other actuator (202) are mounted, wherein
the housing (400) includes
an actuator housing portion (410) that houses the hollow spool actuator (201) and the other actuator (202), and
a substrate housing portion (420) that is adjacent to the actuator housing portion (410) and that houses the substrate (300).

5. The switching device (5) according to claim 3 or 4, wherein
the hollow spool actuator (201) includes a rod (211) that extends in a direction parallel to the axial direction of the hollow spool (101) and that is connected to the hollow spool (101),
the other actuator (202) includes another rod (212) that extends in a direction parallel to the axial direction of the other valve spool (102) and that is connected to the other valve spool,
the hollow spool (101) is connected to the rod (211) so as to be movable with respect to the rod (211) in a direction orthogonal to an axial direction of the rod (211), and
the other valve spool (102) is connected to the other rod (212) so as to be movable with respect to the other rod (212) in a direction orthogonal to an axial direction of the other rod (212).

6. The switching device (5) according to any one of claims 1 to 5, wherein
the case (20) includes a surrounding portion (21 to 23) that is in close contact with the seal material (500) and that allows the hollow spool (101) to move along an axial direction of the hollow spool (101), and
the surrounding portion (21 to 23) leads to the flow path.
